# EUROPEAN PATENT APPLICATION

(11) **EP 3 719 421 A1**
(43) Date of publication of application: **07.10.2020**
(21) Application number: 19166450.7
(22) Date of filing: 01.04.2019
(51) Int. Cl.: F25D 3/10, F25D 16/00, F25D 19/04, F25D 29/00

(54) **TRANSPORTABLE CONTAINER-STRUCTURE FOR CRYOCONSERVATION OF BIOLOGICAL MATERIALS**

(71) Applicant: Air Liquide Sanita Services SpA, 20158 Milano (IT); Isenet Biobanking Srl, 20158 Milano (IT); L'AIR LIQUIDE, SOCIETE ANONYME POUR L'ETUDE ET L'EXPLOITATION DES PROCEDES GEORGES CLAUDE, 75007 Paris (FR)
(72) Inventor: CARLUS, Hélène, 20090 Assago (IT); DE BLASIO, Pasquale, 20090 Assago (IT); BATTOCCHIA, Tiziano, 20090 Assago (IT)
(74) Representative: Pittis, Olivier

(57) **Abstract**

The invention concerns a transportable container-structure (1) for cryoconservation of biological materials comprising a container (4) comprising a main compartment (2) containing cryogenic reservoirs (21) for storing biological materials, and at least one distribution line (64) for distributing a cryogenic fluid to the cryogenic reservoirs (21). The main compartment (2) is dimensioned for receiving at least 4 cryogenic reservoirs (21) and one or several mechanical freezers (22). The invention also concerns a vehicle, such as a truck, comprising a truck bed, and a transportable container-structure for cryoconservation of biological materials according to the invention positioned on and fixed to said truck bed, thereby allowing a transportation of the container-structure on said truck.

## Description

The present invention concerns a transportable container-structure for cryoconservation of biological materials comprising a container with a main compartment or cryoconservation room, in which cryogenic reservoirs for storing the biological materials are arranged and fluidly connected to a distribution line that provides a cryogenic fluid, such as LN₂, to the cryogenic reservoirs.

Biological materials or samples, such as tissues, cells, organs, plasma or others, are commonly stored at cryogenic temperature (also called cryo-temperature), typically at <-180°C, in cryoconservation installations. Those materials, samples or others stored at cryo-temperature are called hereafter "cryo-materials".

For instance, a cryoconservation installation of cryo-materials is described by EP-A-1916492. It comprises a storage room in which several reservoirs or refrigerators are arranged in several rows, which are used for storing the cryo-materials. A cryogenic fluid storage, called LN₂ main tank, supplies liquid nitrogen (LN₂) to the cryogenic containers for keeping the cryo-materials contained therein at cryo-temperature (<-180°C). A remote management system is provided for remotely checking and controlling the installation, including the cryoroom and its components, especially for detecting defaults, such as a lack of LN₂, absence of electric power, leak of LN₂, excessive temperature level... and triggering an alarm in case of problem.

A similar cryoconservation installation is taught by WO-A-9303891.

When a serious technical default is detected, the entire installation has to be shut down, i.e. stopped, for maintenance. This can last from several minutes to several weeks, depending on the seriousness of the problem to be fixed and of the availability of replacement parts, of maintenance staff.... If the maintenance operation requires a long time, such as from several hours to several days or even weeks, contingency measures have to be taken immediately.

This can be also the case, in the frame of a so-called "Disaster Recovery Plan", when a cryoconservation installation has been damaged by a natural disaster, such as an earthquake, a typhoon, a fire....

When the cryo-materials cannot be kept in the cryoconservation installation under repair or maintenance, they have to be transferred in another cryoconservation installation. This is obviously an important drawback as such a transferring involves complex logistics and handling for ensuring that the cryo-materials are safely-transferred, i.e. not broken, kept always at the right temperature.... In other words, such a transferring is always associated with significant risks of deterioration or loss of the cryo-materials.

In this context, a problem to be solved in the frame of the present invention is to ensure that cryo-materials are not damaged or lost in case of a default of a cryoconservation installation where said cryo-materials are stored, without encountering the above drawbacks or issues of prior art cryoconservation installations. This is particularly pertinent when the maintenance operations or the like require a shutdown, i.e. stopping, of the installation for a long time, typically several days or weeks, such as in case of the triggering of a Disaster Recovery Plan.

A solution according to the present invention concerns a transportable, i.e. mobile, container-structure for cryoconservation of biological materials comprising a container comprising a main compartment, also called cryoconservation room, containing :
- cryogenic reservoirs, also called cryogenic containers, for storing biological materials, and
- at least one distribution line for distributing a cryogenic fluid to the cryogenic reservoirs.

Depending on the embodiment, the transportable container-structure according to the present invention can comprise one or several of the following features:
- the cryogenic container has a parallelepiped shape.
- the cryogenic container has a length (L) of less than 20 m, a width (W) of less than 3 m and a height (H) of less than 4 m.
- the cryogenic container has a length (L) of more than 10 m, a width (W) of more than 2 m and a height (H) of more than 2 m.
- the cryogenic container has a length (L) of about 13,71 m (i.e. about 45 feet), a width (W) of about 2,55 m and a height (H) of about 2,91 m.
- the cryogenic container has a parallelepiped shape comprising a rectangular section.
- the cryogenic container comprises a floor or base panel, a top or roof panel and lateral panels forming the walls of the container.
- the container further comprises mobile walls, such as slideable or pivotable walls, preferably lateral panels.
- the cryogenic container is made of metal material, such as steel or stainless steel.
- the main compartment is dimensioned for receiving (i.e. storing) at least 4 cryogenic reservoirs, preferably at least 6 cryogenic reservoirs, more preferably at least 8 cryogenic reservoirs, for example between 8 and 10 cryogenic reservoirs.
- the main compartment is dimensioned for receiving (i.e. storing) at least 1 mechanical refrigerator, also called mechanical freezer, preferably at least 2 mechanical refrigerators, more preferably at least 4 mechanical refrigerators.
- advantageously, the main compartment is dimensioned for receiving (i.e. storing) about 10 cryogenic reservoirs and about 7 mechanical refrigerators.
- the cryogenic reservoirs and the mechanical refrigerators comprise sensors for monitoring parameters of said cryogenic reservoirs and the mechanical refrigerators.
- preferably, the cryogenic reservoirs are equipped with temperature sensors and LN₂-level sensors, i.e. temperature and level probes.
- preferably, the mechanical refrigerators are equipped with temperature sensors.
- preferably, the cryogenic reservoirs and the mechanical refrigerators (i.e. freezers) are fixed to the floor or base panel of the main compartment, i.e. the cryoconservation room, for example by being attached to the floor by screws or the like.
- the cryogenic container further comprises at least one technical compartment, preferably two technical compartments.
- the cryogenic container comprises a first and a second technical compartment "sandwiching" the main compartment, i.e. the main compartment is located between said first and second technical compartments.
- the floor or base panel and/or one or several lateral panels forming the first and/or second technical compartments are made (totally or partially) of grids.
- the first technical compartment comprises an air renewal unit arranged for extracting at least part of the inner atmosphere of the main compartment and introducing fresh air (i.e. atmospheric air) in said main compartment thereby regenerating, i.e. renewing, the inner gaseous atmosphere (i.e. air) of said main compartment.
- the air renewal unit comprises air treatment components, such as blower, extractor, temperature probe/sensor, humidity probe/sensor, control unit...
- the air renewal unit is configured for regenerating the inner atmosphere of the main compartment at a regeneration rate between 1 and 40 volume/hour, preferably between 5 and 30 volume/hour (volume of the main compartment).
- the second technical compartment comprises a cryogenic fluid admission line in fluid connection to the distribution line for providing the cryogenic fluid to said distribution line.
- the cryogenic fluid admission line and/or the distribution line comprise one (or several) conduct, tube, pipeline or similar.
- the cryogenic fluid (also called 'cryo-fluid') is liquid nitrogen (LN₂), i.e. nitrogen in liquid state.
- a cryogenic fluid source is fluidly and mechanically connected to the inlet of the cryogenic fluid admission line for providing cryogenic fluid to said admission line.
- the cryogenic fluid source comprises a tank, vessel, or a similar source, containing the cryogenic fluid, preferably LN₂.
- the cryogenic fluid source contains at least 1000 L of cryogenic fluid, preferably of at least 2000 L of cryogenic fluid, for instance between 2000 and 3000 L.
- the cryogenic fluid source comprises at least one over-pressure safety valve, preferably two over-pressure safety valves, that opens when the pressure inside the cryogenic fluid source exceeds a given maximum pressure-threshold(s), preferably the maximum pressure-threshold is of about 3 bar abs, thereby venting the over-pressure to the atmosphere.
- the cryogenic fluid source is mobile and arranged on a transportable pallet or the like.
- alternatively, the cryogenic fluid source is stationary, i.e. not mobile, preferably located on the ground, for instance on a platform of concrete or the like.
- the cryogenic fluid source comprises monitoring means for monitoring the pressure and/or the level of fluid in said cryogenic fluid source.
- said monitoring means comprise fluid level and/or fluid pressure sensors, probes or the like.
- said monitoring means comprise or are coupled to remote transmission means for remotely transmitting measurement signals provided by the monitoring means.
- remote transmission means comprise a transmitter, such as a modem or the like, for instance a GSM modem transmitter.
- the second technical compartment comprises a cryogenic fluid admission line comprising valve means for controlling the passage of cryogenic fluid in said admission line.
- said valve means comprise an electrovalve.
- it further comprises a pilot unit, i.e. data processing means.
- the pilot unit comprises a (or several) microprocessor, preferably a microcontroller or the like, preferably said microprocessor is arranged on an electronic board.
- preferably, the pilot unit comprises one or several personal industrial computers or the like.
- the pilot unit controls the valve means, i.e. open or close said valve means for allowing or preventing the passage of cryo-fluid from the admission line to the distribution line.
- the cryogenic container further comprises vehicle coupling means for allowing a coupling/uncoupling of the container-structure to a vehicle, such as a truck or the like, in particular to a truck bed, thereby allowing a transportation of the cryogenic container on said vehicle.
- the pilot unit is electrically connected to one or several sensors so as to receive alert signals generated by said sensor(s).
- at least one oxygen sensor is arranged in the main compartment and monitors the amount of oxygen present in the air of said main compartment, preferably at least two oxygen sensors.
- the pilot unit is configured for triggering an alarm when said at least one oxygen sensor determines that the amount of oxygen present in the air of the main compartment is below one or several given thresholds, preferably less than 20 vol. %., for instance, a first threshold of about 19.5 vol.% and a second threshold of about 18 vol.%
- cryogenic container further comprises a pilot unit connected to the temperature sensors, the fluid-level sensors, the monitoring system and/or the valve means.
- the distribution line is fluidly connected to the cryogenic reservoirs by conduct sections each comprising a manual valve and/or an over-pressure safety valve.

The present invention also concerns a truck, or similar vehicle, comprising a truck bed, characterized in that a transportable container-structure for cryoconservation of biological materials according to the present invention is positioned on and fixed to the truck bed, thereby allowing a transportation of the container-structure on said truck.

The present invention will be explained in more details in the following illustrative description of an embodiment of a transportable container-structure according to the present invention, which is made in references to the accompanying drawings among them :
- Figure 1 shows an embodiment of a container useable as a transportable container-structure according to the present invention,
- Figure 2 is a top cross-sectional schematic view of the container-structure of Figure 1, and
- Figure 3 is a top view similar to Figure 2, showing the equipment arranged in another embodiment of a transportable container-structure according to the present invention.

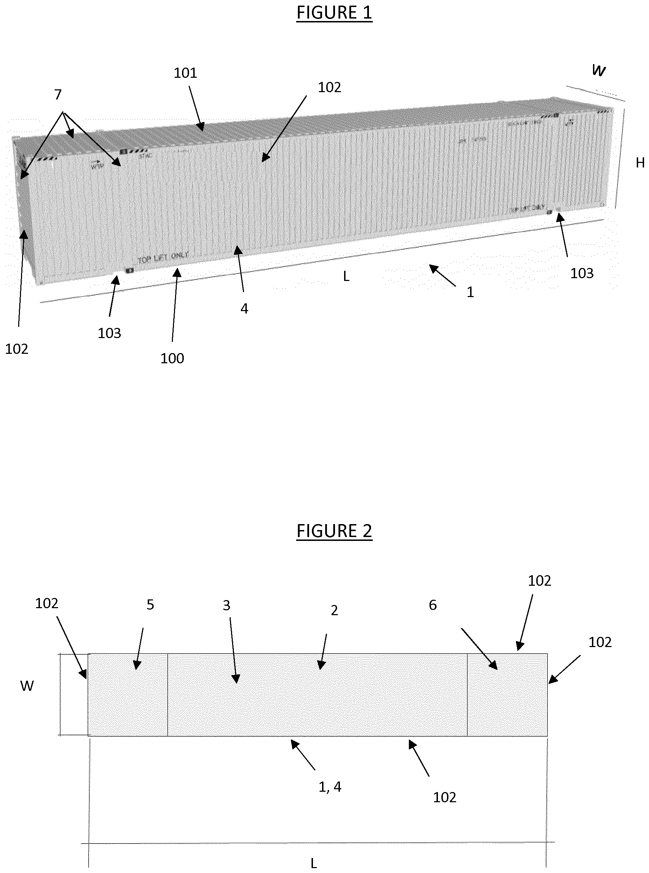

Figure 1 shows an embedment of a transportable (i.e. mobile) container-structure 1 for cryoconservation of biological materials, such as biological samples or the like, according to the present invention, arranged in a cryogenic container 4.

As shown in Figure 2, the cryogenic container 4 of the transportable container-structure 1 defines an inner volume 3 for receiving the various equipment, such as cryo-reservoirs and advantageously refrigerators, used for storing the cryo-materials, as detailed below. The cryogenic container comprises a floor panel 100, a top panel 101, and four lateral panels 102 projecting upwardly from the floor panel 100 to the top panel 101, i.e. the four lateral panels 102 are joining the floor panel 100 to the top panel 101.

Preferably, the cryogenic container 4 has a parallelepiped shape (i.e. comprising a floor or base panel 100, a top or roof panel 101 and lateral panels 102) with a rectangular section. For instance, the container 4 can have a length L of about 13,71 m (i.e. about 45 feet), a width W of about 2,55 m and a height H of about 2,91 m.

The different walls 7 of the cryogenic container 4, namely the floor panel 100, the top panel 101, and the lateral panels 102, can be made of metal material, such as steel or stainless steel. Preferably, the cryogenic container 4comprises mobile walls, such as the lateral panels 102. Indeed, when the cryogenic container 4 is positioned on the ground, the mobile walls are shifted, for instance slided or the like, in order to have more space for the internal equipment.

The cryogenic container 4 is transportable by a vehicle, preferably a truck or the like. Therefore, the cryogenic container 4 comprises vehicle-coupling means, such as coupling points 103, for coupling/uncoupling to a vehicle, such as a truck or the like. It can also comprise pressure cylinders or the like (not shown) for allowing a well-positioning of said container 4 on the vehicle bed, in particular a truck bed.

Such a transportable container-structure 1 is useable on-site for temporarily storing cryo-materials, such as biological samples and the like, for instance in the frame of a Disaster Recovery Plan, where a cryoconservation installation normally storing said cryo-materials has a technical default and/or has been damaged, and has to be shut down for a long time, especially several days, weeks or more, for maintenance or repairing operations.

However, the transportable container-structure 1 of the present invention is also useable as a mobile bio-bank.

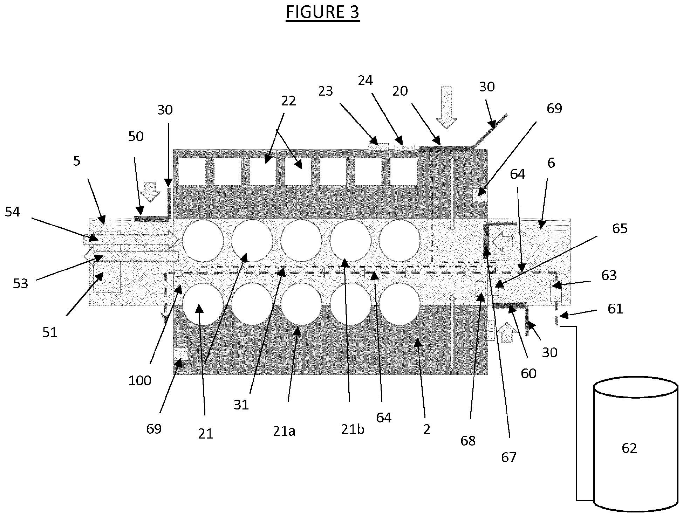

Preferably, the inner volume 3 of the transportable container-structure 1 is divided into several inner compartments 2, 5, 6 comprising a main compartment 2 and one or several technical compartments 5, 6. Preferably, in the embodiment of Figures 2 and 3, the transportable container-structure 1 comprises a first 5 and a second 6 technical compartment that "sandwich" the main compartment 2. In other words, the main compartment 2 is located between the first and second technical compartments 5, 6.

Advantageously, all or part of the walls, floor and/or ceiling of the first and second compartments 5, 6 are made of grid structures or gratings thereby allowing a good ventilation of those compartments 5, 6.

As shown in Figure 3, the main compartment 2, also called the "cryoconservation room", comprises cryogenic reservoirs 21 arranged on the floor or base panel 100, for instance in two parallel rows 21a, 21b, and mechanical refrigerators 22, also arranged on the floor or base panel 100.

Advantageously, the main compartment 2, i.e. the cryoconservation room, is dimensioned, i.e. sized, for receiving at least 4 cryogenic reservoirs 21, preferably at least 6 cryogenic reservoirs 21, and at least 2 mechanical refrigerators 22, preferably at least 4 mechanical refrigerators 22. For instance, 10 cryogenic reservoirs 21 and 7 mechanical refrigerators 22, i.e. freezers, are stored in the main compartment 2, as shown in Figure 3.

The cryogenic reservoirs 21 are used for storing biological materials, such as samples or the like, at cryo-temperature (i.e. <-180°C), typically at about -196°C, whereas the mechanical refrigerators or freezers 22 are used for storing biological materials only at "freezing" temperature that are higher than cryo-temperature, typically between about -10°C and about -120°C, preferably at about -80°C. Indeed, some materials do not need to be and/or cannot be stored at cryo-temperatures.

The cryogenic reservoirs 21 are fed with a cryogenic fluid, called the "cryo-fluid", preferably liquid nitrogen (LN₂), that is at liquid state and at a cryo-temperature of about -196°C.

Further, the refrigerators or freezers 22 generate their own "cold" (i.e. negative calories), in a known manner, thanks to integrated cooling systems power by electric current.

Monitoring and alarm systems are also provided for monitoring for instance the temperature in the cryogenic reservoirs 21 and in the refrigerators 22.

Other monitoring and alarm systems can be used for monitoring other critical parameters, such as:
- the doors or lids of the cryogenic reservoirs 21 and/or of the freezers 22 to make sure that they are correctly closed,
- the level of LN₂ in the cryogenic reservoirs 21 to make sure that it is not too low,
- the temperature in the cryogenic reservoirs 21 and/or in the freezers 22 to make sure that it is not too high,
- the concentration of O₂ in the air of the main compartment 2. Indeed, a lack of O₂ (e.g. <20% in vol.) resulting in an excess of N₂ could reflect a LN₂ leak. This is detailed below.
- the electric powering of refrigerators 22 to make sure that they are powered and able to generate their own cold,
- etc....

As detailed below, monitoring systems comprise sensors or probes that are connected to a pilot unit 65 by an electrical network or the like, whereas alarm systems comprise light and/or audio alarms 23, 24.

As shown in Figure 3, the first technical compartment 5 comprises an air renewal unit 51 that can regenerate the air (i.e. inner atmosphere) in the inner volume 3 of the transportable container-structure of the present invention, especially in the main compartment 2. Preferably, said air renewal unit 51 is controlled by the pilot unit 65 for renewing (i.e. replacing) less than 10 volumes per hour (e.g. about 6 vol/hr) of the main compartment 2, in normal conditions, and more than 15 vol/hr (e.g. about 25 vol/hr), in case of emergency. Air renewal unit 51 comprises one or several motorized blowers, motorized gas extractors...

As shown in Figure 3, the second technical compartment 6 comprises a cryo-fluid admission line 61 for providing a cryogenic fluid, i.e. the cryo-fluid, typically liquid nitrogen (LN₂), such as a conduct, pipeline or similar to the cryogenic container 4 useable as a transportable container-structure 1 according to the present invention.

Said admission line 61 is fluidly and mechanically connected to a cryogenic fluid source 62, containing the cryo-fluid in liquid state, typically a LN₂ tank, vessel or the like. The LN₂ tank generally contains at least 1000 L of LN₂, for instance of between 2000 and 3000 L.

The cryogenic fluid source 62 is located outside of the transportable container-structure 1 according to the present invention. For instance, the cryogenic fluid source 62 can be a storage tank already present on the site where the container-structure 1 is provided, or alternatively, it can be a mobile tank.

The cryogenic fluid source 62 comprises at least one over-pressure safety valve that opens when the pressure inside the cryogenic fluid source exceeds a given maximum pressure-threshold, preferably the maximum pressure-threshold is of about 3 bar abs, thereby venting the over-pressure to the atmosphere. Preferably, two safety valves are used for venting at different over-pressure levels. For example the first and second safety valves may both vent if the over-pressure exceeds a second higher pressure threshold.

The cryogenic fluid source 62 can be mobile and arranged on a transportable pallet or the like, or alternatively, it can be stationary, i.e. not mobile, preferably installed on the ground, for instance on a platform of concrete or the like.

The cryogenic fluid source 62 comprises monitoring means for monitoring the fluid level and/or the fluid pressure in said cryogenic fluid source 62, such as fluid level and pressure sensors, probes or the like, that comprise or are coupled to remote transmission means for remotely transmitting measurement signals provided by the monitoring means. Said remote transmission means can comprise a transmitter, such as a modem or the like, for instance a GSM modem transmitter.

Further, the second technical compartment 6 also comprises valve means 63, such as an electrovalve or the like, arranged on admission line 61. The second technical compartment 6 preferably comprises a bypass group (useable for maintenance, in case of valve failure) and safety means, such as a second safety valve, for limiting the cryo-fluid pressure at a desired level, for instance at 4 bar abs.

Valve means 63 are controlled by a pilot unit 65, preferably also arranged in the second technical compartment 6, comprising a microprocessor, such as a microcontroller, for controlling the delivery of cryo-fluid by the admission line 61 to one (or several) distribution line(s) 64, such as a fluid line network.

Pilot unit 65 can comprise an industrial personal computer or the like.

Said distribution line(s) 64 is configured for distributing, i.e. delivering, the cryo-fluid, preferably LN₂, provided by admission line 61 to the cryogenic reservoirs 21 arranged in the main compartment 2.

In other words, said distribution line 64 is fluidly connected to the admission line 61 and the passage of cryo-fluid from fluid line 61 to distribution line 64, is controlled by valve means 63, preferably an electrovalve piloted by said pilot unit 65, as hereafter explained.

Preferably, the distribution line(s) 64 can comprise two coaxially-arranged pipes, namely an inner pipe and outer pipe. It is super-insulated by an insulating material, such as Mylar or similar, arranged around the inner pipe and preferably vacuum in the space between inner pipe and the outer pipe, i.e. in the lumen of the outer pipe that contains the inner pipe.

Generally speaking, the pilot unit 65 acts as a management system that controls, i.e. pilots and/or manages, different elements of the transportable structure 1 that need to be controlled, that processes signals, that triggers alarms....

In particular, pilot unit 65 controls some elements or components of the transportable container-structure 1 based on signals received from various sensors arranged in the container 4. Thus, pilot unit 65 is electrically connected to the cryogenic reservoirs 21 and refrigerators 22 so as to receive alert signals generated by sensors arranged in/on the cryogenic reservoirs 21 and refrigerators 22 that are located in the main compartment 2, such as temperature sensors, cryo-fluid (LN₂) level sensors, open-door/lid sensors... Further, pilot unit 65 can also be electrically connected to other sensors, such as oxygen concentration sensors arranged in the main compartment 2 (e.g. if <19,5% of O₂), power-default alarm...

When an alert signal is received from a sensor, pilot unit 65 is configured for processing said alert signal and, if need be, for triggering an alarm (i.e. light and/or sound alarm) for informing a user, such as maintenance staff, that a problem or default has been identified so that appropriate measures for fixing the problem can be taken.

Thus, pilot unit 65 is configured for controlling said valve means 63, preferably an electrovalve, for allowing or prohibiting the passage of cryo-fluid, e.g. LN₂, from admission line 61 to distribution line(s) 64, in particular for stopping the delivery/passage of cryo-fluid, when an alert signal is received showing that the oxygen level in the main compartment 2 is below a minimum threshold, for instance <18 vol.%, meaning that a LN₂ leak probably exists. In that case, pilot unit 65 also controls, i.e. starts, the air renewal unit 51 for quickly (e.g. 25 vol/hr) renewing/regenerating the air (i.e. inner atmosphere) of the main compartment 2 as above explained.

The pilot unit 65 can also trigger a flashing light 23 and/or an audible alarm 24 arranged on an outer wall of the container 4 for making people present around the container 4, aware of the alarm situation.

Of course, alert reports can also be remotely sent by said pilot unit 65 to a distant device, such as server, computer, smartphone or the like, thanks to communication means, such as a GSM modem, an internet connection or the like.

Furthermore, the installation can include a CO₂ source useable in case of problem affecting the mechanical freezers, such as a power supply failure. CO₂ from that CO₂ source is then provided to the freezers for keeping a low temperature, i.e. of about -80°C, in said mechanical freezers.

As shown in Figure 3, it is also provided an internal passage 67 arranged in the internal wall separating the second technical compartment 6 and the main compartment 2 for allowing a user present in the second compartment 6 to access directly to the main compartment 2. Said internal passage 67 can comprise a door, preferably a door similar to the door of first entrance 50.

Preferably, the distribution line(s) 64 distributing, i.e. delivering, the cryo-fluid, preferably LN₂, to the cryogenic reservoirs 21 arranged in the main compartment 2 is fluidly connected to each cryogenic reservoirs 21 by a conduct section (not shown), i.e. a branched conduct, such as a flexible hose or the like, that comprises a manual valve (not shown) for controlling the passage of cryo-fluid (maintenance...) and/or an over-pressure safety valve (not shown) for making sure that the pressure is always kept below a given maximum pressure level, for instance less than about 5 bar abs.

As already explained, the main compartment 2 comprises one or several oxygen sensors 69, such as electrochemical sensors, for measuring the amount of oxygen in the internal atmosphere (air) of the main compartment 2.

Those O₂ sensors 69 are connected to a monitoring system 68 for monitoring the amount of oxygen in the main compartment 2.

Said monitoring system 68 cooperates with the pilot unit 65 so as to determine whether the oxygen concentration is above or below a given threshold. For instance, when the oxygen amount that is monitored by the monitoring system 68 falls below a minimum O₂ threshold, e.g. < 19,5 vol.% or <18 vol.%, the pilot unit 65 pilots the air renewal unit 51 for quickly renewing the air (i.e. impure air) of the main compartment 2 at, e.g., regeneration rate of 25 vol/hr.

Impure air is extracted from the main compartment 2 by the air renewal unit 51 that comprises one (or several) air extracting line(s), such as a gas passage, conduct or the like. Impure air is vented to the atmosphere by said air extracting line(s).

Impure air is then replaced by "fresh" air (i.e. atmospheric air) that is provided to the main compartment 2 by the air renewal unit 51 that further comprises one (or several) air feeding line(s), such as a gas passage, conduct or the like, that are fluidly connected to the ambient atmosphere (i.e. outside) and that convey fresh air into the main compartment 2.

A cable network 31 is arranged into the container 4 for connecting the different systems or devices to the pilot unit 65, such as the cryogenic reservoirs 21, the refrigerators 22, the O₂ sensors 69, the alarm systems 23, 24....

Further, the different devices that are arranged in the container 4 and that need electric current for working, are electrically-powered by one (or several) power unit, such as batteries or electric cable(s) allowing an electrical connection to a current distribution network (110/220V) or the like, or any other electric current sources.

Of course, depending on the embodiment, it is also possible to provide a unique power unit for providing electric power to all the compartments 2, 5, 6 or, alternatively, a mutualized power unit for providing current to two different compartments, for instance to one of the first and second technical compartments 5, 6 and to the main compartment 2.

Furthermore, the first technical compartment 5 comprises a first entrance 50, the second technical compartment 6 comprises a second entrance 60 and the main compartment 2 comprises a main entrance 20 arranged in an outer lateral wall 7 of the container 4. Each entrance is equipped with a door with locking means, such a lock... and a panic bar for opening the door, even when locked, in case of emergency. In a preferred embodiment, the doors are equipped with access badge readers for allowing only authorized users to enter into the different compartments 2, 5, 6.

## Claims

1. Transportable container-structure (1) for cryoconservation of biological materials comprising a container (4) comprising a main compartment (2) containing :
- cryogenic reservoirs (21) for storing biological materials, and
- at least one distribution line (64) for distributing a cryogenic fluid to the cryogenic reservoirs (21).

2. Transportable structure according to the preceding Claim, **characterized in that** the container (4) has a parallelepiped shape with a length less than 20 m, a width of less than 3 m and a height of less than 4 m.

3. Transportable structure according to any one of the preceding Claims, **characterized in that** the main compartment (2) is dimensioned for receiving at least 4 cryogenic reservoirs (21), preferably at least 6 cryogenic reservoirs (21), and/or at least 1 mechanical refrigerator (22), preferably at least 2 mechanical refrigerators (22).

4. Transportable structure according to any one of the preceding Claims, **characterized in that** the container (4) further comprises one or several technical compartments (5, 6), preferably the container (4) comprises a first and a second technical compartment (5, 6) sandwiching the main compartment (2).

5. Transportable structure according to any one of the preceding Claims, **characterized in that** it further comprises mobile walls, preferably lateral panels (102).

6. Transportable structure according to any one of the preceding Claims, **characterized in that** the first technical compartment (5) comprises an air renewal unit (51) arranged for extracting at least part of the inner atmosphere of the main compartment (2) and introducing fresh air in said main compartment (2) thereby regenerating the inner atmosphere of said main compartment (2).

7. Transportable structure according to any one of the preceding Claims, **characterized in that** the second technical compartment (6) comprises a cryogenic fluid admission line (61) in fluid connection to the distribution line (64) for providing the cryogenic fluid to said distribution line (64), preferably the cryogenic fluid is liquid nitrogen (42).

8. Transportable structure according to any one of the preceding Claims, **characterized in that** the second technical compartment (6) comprises a cryogenic fluid admission line (61) comprising valve means (63) for controlling the passage of cryogenic fluid in said admission line (61), preferably valve means (63) comprise an electrovalve.

9. Transportable structure according to any one of the preceding Claims, **characterized in that**:
- the cryogenic reservoirs (21) comprise temperature sensors and/or fluid-level sensors, and
- the mechanical refrigerators (22) comprise temperature sensors.

10. Transportable structure according to any one of the preceding Claims, **characterized in that** the main compartment (2) comprises one or several oxygen sensors (69) connected to a monitoring system (68).

11. Transportable structure according to any one of the preceding Claims, **characterized in that** it further comprises a pilot unit (65) connected to the temperature sensors, the fluid-level sensors, the monitoring system (68) and/or valve means (63).

12. Transportable structure according to any one of the preceding Claims, **characterized in that** the distribution line (64) is fluidly connected to the cryogenic reservoirs (21) by conduct sections each comprising a manual valve and/or an over-pressure safety valve.

13. Transportable structure according to any one of the preceding Claims, **characterized in that** the pilot unit (65) is configured for triggering an alarm when an oxygen sensor (69) determines that the amount of oxygen present in the air of the main compartment (2) is below a given threshold, preferably less than 20 vol. %.

14. Transportable structure according to any one of the preceding Claims, **characterized in that** the container (4) further comprises vehicle coupling means for allowing a coupling/uncoupling of the container-structure (1) to a vehicle, in particular to truck bed.

15. Truck comprising a truck bed, **characterized in that** a transportable container-structure for cryoconservation of biological materials according to the preceding claims is positioned on and fixed to said truck bed, thereby allowing a transportation of the container-structure on said truck.
